# EUROPEAN PATENT APPLICATION

(11) **EP 2 499 924 A1**
(43) Date of publication of application: **19.09.2012**
(21) Application number: 10829918.1
(22) Date of filing: 09.11.2010
(51) Int. Cl.: A23L 3/36, F25B 21/00

(54) **FREEZING METHOD**

(30) Priority: 10.11.2009 JP 2009256748
(71) Applicant: The University of Tokyo, Bunkyo-Ku Tokyo 113-8654 (JP)
(72) Inventor: MIHARA, Makoto, Tokyo 113-8654 (JP); NAKAGAWA, Takashi, Tokyo 113-8654 (JP); NOGUCHI, Shuhei, Tokyo 113-8654 (JP); DOHI, Takeyoshi, Tokyo 113-8654 (JP); MASAMUNE, Ken, Tokyo 113-8654 (JP); NIINO, Toyotaro, Tokyo 113-8654 (JP); YAMASHITA, Hiromasa, Tokyo 113-8654 (JP)
(74) Representative: Polypatent
(86) International application number: PCT/JP2010/069898
(87) International publication number: WO 2011/058959

(57) **Abstract**

A method for freezing an object such as foods and organs in a non-destructive state in the presence of a magnetic field, wherein frequency of the magnetic field is 200 Hz or higher.

## Description

### Technical Field

The present invention relates to a freezing method. More specifically, the present invention relates to a method for freezing foods, organs, and the like in a non-destructive state in the- presence of a magnetic field.

### Background Art

As a method for freezing foods and the like with suppression of separation of moisture and destruction of tissues at the time of frozen storage so as to successfully avoid degradation of freshness and flavors of foods, a method of utilizing magnetic resonance has been proposed (Japanese Patent Unexamined Publication (Kokai) No. 2000-325062). This method comprises the step of continuously or intermittently irradiating electromagnetic waves of a predetermined frequency on an object to be frozen such as foods placed in a static magnetic field, so that magnetic resonance of hydrogen nuclei, constituting water molecules contained in the object to be frozen, is induced to lower a freezing temperature of moisture, and thereby quick freezing is attained at a freezing temperature lower an ordinary freezing temperature. This method successfully achieves freezing without destruction of cells, and accordingly, the method has been focused as a method that enables regeneration of foods by thawing without degradation of tastes and flavors of foods before being frozen (in the specification, the aforementioned freezing method is sometimes referred to as "magnetic resonance freezing method"). Apparatuses that can be used for the magnetic resonance freezing method and the like are disclosed in, for example, International Patent Publication WO01/24647, Japanese Patent Unexamined Publication Nos. 2003-139460, 2004-81133, and the like. By applying the magnetic resonance freezing method to freezing of the ovary of cynomolgus monkey, a possibility is suggested that the ovary can be stored under frozen state for a long period of time without destruction of cells (Sankai, The 25th Convention of Japan Society of Fertilization and Implantation, August 31, 2007).

The magnetic resonance freezing method is to suppress cell destruction in an object during a freezing process by cooling the object in a magnetic field to produce supercooled state with excellent reproducibility, and thereby achieve completion of the successive process of start of freezing through full freezing in an extremely short time. This method comprises the step of flowing an alternating current in a coil generally connected to an alternator of 100 Hz or less, typically a commercial alternating current power supply of 50 or 60 Hz, to generate a varying magnetic field with a frequency corresponding to that of the alternating current at the center of the coil, and cooling an object in the magnetic field. However, a correlation between a varying magnetic field formed with an alternating current and supercooled state has not been fully elucidated so far. In particular, any correlation between a frequency of a magnetic field and supercooled state has not been revealed.

### Prior art references

### Patent documents

Patent document 1: Japanese Patent Unexamined Publication No. 2000-325062
Patent document 2: International Patent Publication WO01/24647
Patent document 3: Japanese Patent Unexamined Publication No. 2003-139460
Patent document 4: Japanese Patent Unexamined Publication No. 2004-81133

### Non-patent document

Non-patent document 1: The 25th Convention of Japan Society of Fertilization and Implantation, Organon Sponsored Special Symposium, Cryopreservation and Transplantation of Ovarian Tissue, A Novel Method for Cryopreservation of Ovarian Tissue in Cynomolgus Monkeys August 31, 2007, http://jsfi2007.umin.jp/program.html

### Summary of the Invention

### Object to be Achieved by the Invention

An object of the present invention is to provide a method for freezing an object such as foods and organs in a non-destructive state in the presence of a magnetic field. More specifically, the object of the present invention is to provide a freezing method achieving less destruction of an object, such as cell destruction, as compared with the conventional magnetic resonance freezing method.

### Means for Achieving the Object

The inventors of the present invention conducted various researches to achieve the aforementioned object, and as a result, they found that, in the magnetic resonance freezing method, the degree of supercooling before the start of freezing was improved by using a higher frequency of the magnetic field as compared with the conventional frequency (100 Hz or lower), and that an extremely high degree of supercooling was successfully attained with a magnetic field frequency of about 2,000 Hz, and thereby a period of time from the start to completion of freezing was remarkably shortened to freeze an object in a non-destructive state. The present invention was accomplished on the basis of the aforementioned findings.

The present invention thus provides a magnetic resonance freezing method comprising the step of cooling an object in a magnetic field, wherein a frequency of the magnetic field is 200 Hz or higher.

According to preferred embodiments of the present invention, there are provided the aforementioned magnetic resonance freezing method, wherein the frequency of the magnetic field is in a range of from 1,000 to 10,000 Hz; the aforementioned magnetic resonance freezing method, wherein intensity of the magnetic field is in a range of from 0.01 to 0.4 mT, preferably 0.2 mT; the aforementioned magnetic resonance freezing method, wherein freezing is conducted at a temperature in a range of -2°C or lower and -40°C or higher; and the aforementioned magnetic resonance freezing method, wherein freezing is conducted with temperature decrease of 0.1 to 1.0°C per 1 minute.

According to more preferred embodiments, there are provided the aforementioned magnetic resonance freezing method, wherein the object is a food; the aforementioned magnetic resonance freezing method, wherein the object is an biological individual or an organ or tissue separated from a living body; the aforementioned magnetic resonance freezing method, wherein the object is a cell: and the aforementioned magnetic resonance freezing method, wherein the object is a nucleic acid or a protein.

From another aspect of the present invention, there is provided a method for performing pathological diagnosis during a surgical operation by using a sample prepared by freezing a tissue separated and collected from a patient under the surgical operation, wherein freezing is performed by the aforementioned magnetic resonance freezing method.

### Effect of the Invention

According to the magnetic resonance freezing method provided by the present invention, a higher supercooling degree can be attained as compared with that of the conventional magnetic resonance freezing method, and thereby a period of time from the start to completion of freezing of an object can be significantly shortened. As a result, according to the magnetic resonance freezing method of the present invention, an object such as foods and tissues can be frozen in a substantially non-destructive state.

### Brief Description of the Drawings

[Fig. 1] Fig. 1 shows temperature variation observed in a freezing test performed three times at a magnetic field frequency of 50 Hz as a control.
[Fig. 2] Fig. 2 shows results of average and dispersion of supercooling degree obtained by changing a magnetic field frequency.
[Fig. 3] Fig. 3 shows results of microscopic observation of a section of the brain tissue of a rat (non-frozen), and that of a whole frozen rat by a quick freezing method (traditional freezing), freezing at a magnetic field frequency of 100 Hz or lower (CAS), and the method of the present invention (supercooling and freezing at 2 kHz).
[Fig. 4] Fig. 4 shows results of microscopic observation of a section of the small intestine tissue of a rat (non-frozen), and that of a whole frozen rat by a quick freezing method (traditional freezing), freezing at a magnetic field frequency of 100 Hz or lower (CAS), and the method of the present invention (supercooling and freezing at 2 kHz).
[Fig. 5] Fig. 5 shows results of microscopic observation of a section of alveolar tissue of a rat (non-frozen), and that of a whole frozen rat by a quick freezing method (traditional freezing), freezing at a magnetic field frequency of 100 Hz or lower (CAS), and the method of the present invention (supercooling and freezing at 2 kHz).
[Fig. 6] Fig. 6 shows ALP activities observed after freezing and thawing of ALP solution were repeated 6 times at a magnetic field frequency of 2 kHz. Results obtained by using a stainless steel tube are shown.
[Fig. 7] Fig. 7 shows ALP activities observed after freezing and thawing of ALP solution were repeated 6 times at a magnetic field frequency of 2 kHz. Results obtained without using a stainless steel tube are shown.
[Fig. 8] Fig. 8 shows fluorescence intensity of GFP observed after freezing and thawing of GFP solution was repeated 6 times at a magnetic field frequency of 2 kHz. Modes for Carrying out the Invention

The magnetic resonance freezing method of the present invention is characterized in that an object is cooled in a magnetic field at a magnetic field frequency of 200 Hz or higher. The basic concept of the magnetic resonance freezing method comprising the step of cooling an object in a magnetic field is described in, for example, Japanese Patent Unexamined Publication No. 2000-325062, and apparatuses and the like to be used for this method are described in, for example, International Patent Publication WO 01/24647, Japanese Patent Unexamined Publication Nos. 2003-139460, 2004-81133, and the like. Therefore, those skilled in the art can accurately understand the concept of the magnetic resonance freezing method by referring to these publications. The entire disclosures of these publications are incorporated in the disclosure of the specification by reference.

When the magnetic resonance freezing method is performed, it is necessary to flow an alternating current in a coil for forming a magnetic field. Since the frequency of the magnetic field is identical to that of the alternating current flown in the coil, the frequency of the alternating current to be flown in the coil may be controlled in order to adjust the frequency of the magnetic field in the method of the present invention. For example, an alternating current of a desired frequency can be generated with a readily available function generator, and a magnetic field of a frequency corresponding to that of the alternating current can be formed in the coil.

The frequency of the magnetic field is not particularly limited so long as the frequency is 200 Hz or higher. In general, a frequency of, for example, preferably 400 Hz or higher, more preferably 600 Hz or higher, still more preferably 800 Hz or higher, particularly preferably 1,000 Hz or higher can be chosen. Although the maximum frequency is not particularly limited, the frequency is, for example, 200,000 Hz or lower, preferably 100,000 Hz or lower, more preferably 10,000 Hz or lower, and most preferably 5,000 Hz or lower. According to a preferred embodiment of the present invention, the frequency of the magnetic field is in a range of from 1,000 to 10,000 Hz, and a frequency of about 2,000 Hz is particularly preferred.

A magnetic field intensity used in the magnetic resonance freezing method is not particularly limited, and can be suitably selected depending on a type, size, and the like of the object. For example, when a small organ such as the ovary or cells are frozen, the intensity can be set to be, for example, 0.01 to 0.4 mT, preferably about 0.2 mT. A temperature for performing the freezing operation is also not particularly limited. The operation may be performed at a temperature in a range of from -2°C or lower and -40°C or higher, preferably in a range of -20°C or lower and -33°C or higher, or in a range of -20°C or lower and -40°C or higher. At the time of freezing, the temperature can be lowered, for example, at a rate of 0.1 to 1.0°C per minute, preferably at a rate of about 0.5°C per minute. It is preferred that a temperature of cooling bath in the coil is set to be about -2°C at the time of the start, and the temperature is lowered at a rate of -0.5°C/minute to, for example, -33°C as the final temperature in the coil.

As apparatuses used for the magnetic resonance freezing method, various apparatuses are provided by, for example, ABI Co., Ltd. (http://www.abi-net.co.jp/, CAS (Cell Alive System)). For performing the magnetic field resonance freezing method of the present invention, a device for adjusting the magnetic field frequency may be added to such freezing apparatuses. For example, the apparatus is preferably equipped with a device for flowing an alternating current in a coil using a function generator as described above. Every apparatus is provided as an apparatus for forming a magnetic field with a commercial alternating current of 50 or 60 Hz in a freezer to vibrate water molecules in an object, so that a supercooled state is formed in which the object is not frozen at a temperature of about -10°C, and the whole cells are frozen all at once at -20°C or lower. By elevating the frequency of the magnetic field to a frequency in the aforementioned range, a supercooled state is attained at a still lower temperature, and thereby the object transfers from a supercooled state to a completely frozen state in an extremely short period of time. In a cooling bath, ethanol, a mixture of water and ethylene glycol, or the like may be filled as an antifreezing fluid.

An object that can be frozen by the magnetic resonance freezing method of the present invention is not particularly limited, so long as the object contains moisture. Examples include, for example, foods such as vegetables, cereals, meat and processed foods; dead biological individuals of mammals including human, insects, threadworms, and the like; organs isolated from living bodies such as ovary, testis and liver; tissues isolated from living bodies such as muscles, fats and skins; body fluids isolated from living bodies such as blood, lymph and sperm; cells such as cultured cells, ova, spermatids and fertilized ova and cell organelles; nucleic acid such as DNAs and RNAs; proteins such as collagen, various receptors and various enzymes; tissue sections isolated from living bodies for preparing samples for pathological diagnosis; solutions such as physiological saline, buffer solutions, solutions of cryoprotective agents, and the like, but the objects are not limited to these examples. According to the magnetic resonance freezing method of the present invention, neither tissues nor cells are destructed at the time of freezing. Accordingly, the method can be preferably used for, for example, freezing of foods, as well as freezing of organs or tissues such as ovary and testis.

Further, by using the magnetic resonance freezing method of the present invention, a tissue isolated and collected from a patient under a surgical operation can be frozen to prepare a pathological sample, and pathological diagnosis can be performed by using the pathological sample during the surgical operation. For example, a tissue isolated and collected from a patient under a surgical operation can be frozen by the magnetic resonance freezing method of the present invention. A type of the surgical operation is not particularly limited, and the surgical operation may be an invasive operation or a bloodless operation, or an endoscopic operation. As the tissue, any tissues including visually distinguishable pathological tissues such as tumor tissues, as well as lymphoid tissues visually undistinguishable from normal tissues, but suspected to include invasion of malignant tumor may be used as the object. The term tissue should be construed in its broadest sense including all or a part of an organ as well as a body fluid and the like, and the term should not be construed in any limitative sense. For example, in the case of a surgical operation for extracting a malignant tumor, a tissue of a circumferential part of an extracted malignant tumor tissue can be frozen by the magnetic resonance freezing method, and it can be confirmed that no malignant tumor cells are present in the circumferential part.

A pretreatment applied before freezing to a tissue isolated and collected from a patient is not particularly limited. For example, a treatment may be applied in which the tissue is washed with ice cooled physiological saline or the like, and put on an embedding dish containing an embedding agent (for example, OCT Compound (Funakoshi) and the like), and the tissue and dish are wrapped with Saran Wrap or the like, put in a nylon bag, degassed, and sealed. However, the aforementioend step may be appropriately altered or modified, and may be even omitted, if desired.

The method for preparing a section from the frozen tissue to prepare a sample for pathological diagnosis is not particularly limited, and ordinary methods used in conventional quick pathological diagnostic methods and the like can be employed. In general, a section having a thickness of several micrometers, preferably about 5 to 7 micrometers, may be prepared from a frozen tissue, adhered on slide glass, air-dried, and subjected to hematoxylin-eosin staining in a conventional manner. By observing a sample obtained as described above under a microscope to examine cell morphology and the like, pathological diagnosis can be performed.

Further, after a section having a thickness of several micrometers, preferably about 5 to 7 micrometers, is prepared from a frozen tissue, adhered on slide glass, and air-dried, and further by fixing the tissue with a widely used fixative (for example, ethanol, acetone, formalin, methanol, or a combination of these solvents) as required, and then allowing an antibody specific to a particular membrane protein (primary antibody) to act on the tissue, and further allowing secondary antibody to act on the tissue to perform histoimmunochemical staining, presence or localization of the membrane protein in the tissue of the sample can be examined. In the aforementioned method, a staining method in which only the primary antibody is employed without using the secondary antibody may be optionally used.

More specifically, the staining can be performed with the steps of, for example, preparation of frozen section → fixation (15 seconds) → washing with PBS (10 seconds x 3 times) → reaction with HRP-labeled polymer-bound primary antibody (3 minutes) → washing with PBS (10 seconds x 5 times) → DAB staining (2 minutes) → washing with water (5 seconds) → 5% methyl green nucleus staining → washing with water + dehydration + penetration + encapsulation (20 seconds in total). However, the steps are not limited to these examples. By verifying presence of a membrane protein specifically expressed in a pathological tissue of a specific disease as described above, pathological diagnosis can be determined. Examples of the specific membrane protein include, for example, EMA (epithelial membrane antigen), which is a carcinoma marker, and the like, but the protein is not limited to these examples.

### Examples

The present invention will be more specifically explained with reference to examples. However, the method of the present invention is not limited by the following examples.

### Example 1

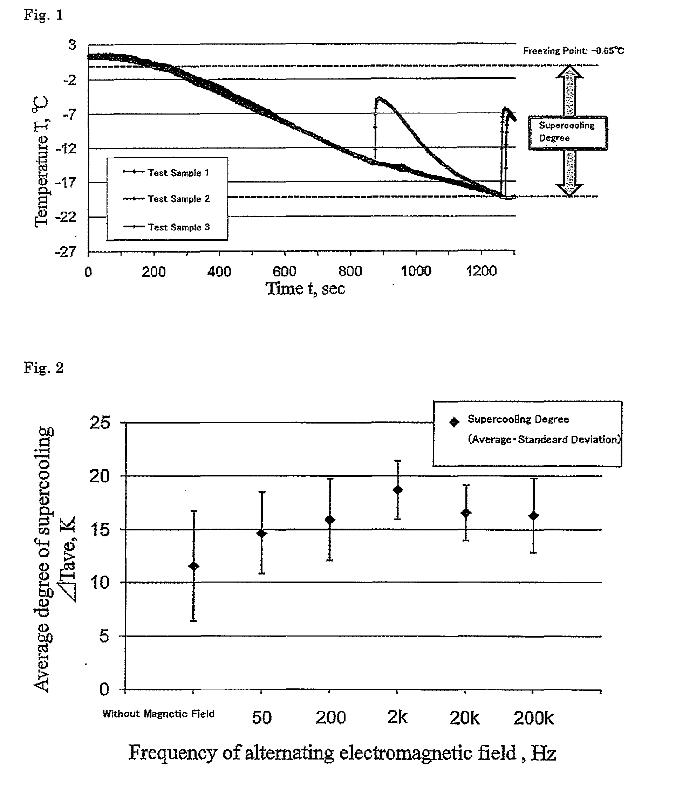

A coil (number of turns was 6) having an internal diameter of 80 mm and a depth of 80 mm was applied outside to an aluminum cooling bath having an internal diameter of 40 mm and a depth of 40 mm, and the coil and the cooling bath were put on a cooling device (Stirling engine, Twinbird Corporation, SC-UD08). A function generator for generating an alternating current was connected to the coil. By using this apparatus, 1 ml of physiological saline (freezing point: -0.65°C) was cooled to perform a freezing experiment. By using a magnetic field intensity of 0.12 ± 0.02 mT, cooling rate of 0.8 K/min, and an alternating current frequency of 0 Hz (without magnetic field), 50 Hz, 200 Hz, 2,000 Hz, 20,000 Hz, or 200,000 Hz, the experiment was performed 12 times for each of the different magnetic field frequencies. Temperature variation observed in three times of the experiments performed with a magnetic field frequency of 50 Hz is shown in Fig. 1. For each test, "supercooling degree" was obtained as an absolute value of difference of the freezing point of physiological saline and a temperature of the same immediately before disappearance of the supercooled state, and average and dispersion thereof were calculated. A significant difference of the population mean was determined by using the Welch 95% one-sided test with respect the results obtained at 0 Hz (without magnetic field).

The results are shown in Fig. 2. Increase of supercooling was observed for each of frequencies of 200 Hz, 2,000 Hz, 20,000 Hz, and 200,000 Hz, whilst significant difference was not observed for the frequency of 50 Hz as compared with the case of 0 Hz (without magnetic field).

### Example 2

Two of Lewis female rats (285 g and 280 g) were euthanized under ether anesthesia after 24-hour starving, and immediately thereafter, the animals were used for the freezing experiment without any treatment and without extracting the organs. 60% Ethylene glycol was filled in a cooling bath of a freezing apparatus, the rats enclosed in a nylon bag with eliminating air as much as possible were put into a cage equipped with a weight, and then sank into ethylene glycol in the cooling bath. At a magnetic field intensity of 0.1 to 0.2 mT, the rats were cooled at 2°C for 1 hour, and then cooled to -30°C at a rate of -0.5°C/minute to attain freezing. The process from the start of the cooling to the end of freezing required 2 hours and 45 minutes. The magnetic field frequency was 2,000 Hz.

Tissue sections were sliced from the frozen tissue in a thickness of 5 to 7 µm, and the sections were attached onto a slide glass, and then air-dried for 30 minutes. The tissue sections were stained by hematoxylin-eosin staining as follows. The slide was immersed in 95% ethanol for 2 minutes and washed with running water; the slide was immersed in a hematoxylin solution for 1 minute and washed with running water; the slide was immersed in an eosin Y solution for 30 seconds and washed with running water; the slide was successively immersed in 70%, 80%, 90% and 100% ethanol for dehydration, then immersed in xylene, and mounted with Malinol. As controls, sections were prepared from a tissue frozen at a magnetic field frequency of 100 Hz or lower, and a control sample quickly frozen with liquid nitrogen, and stained in the same manner. The samples obtained were observed with an optical microscope (x 100 or x 400).

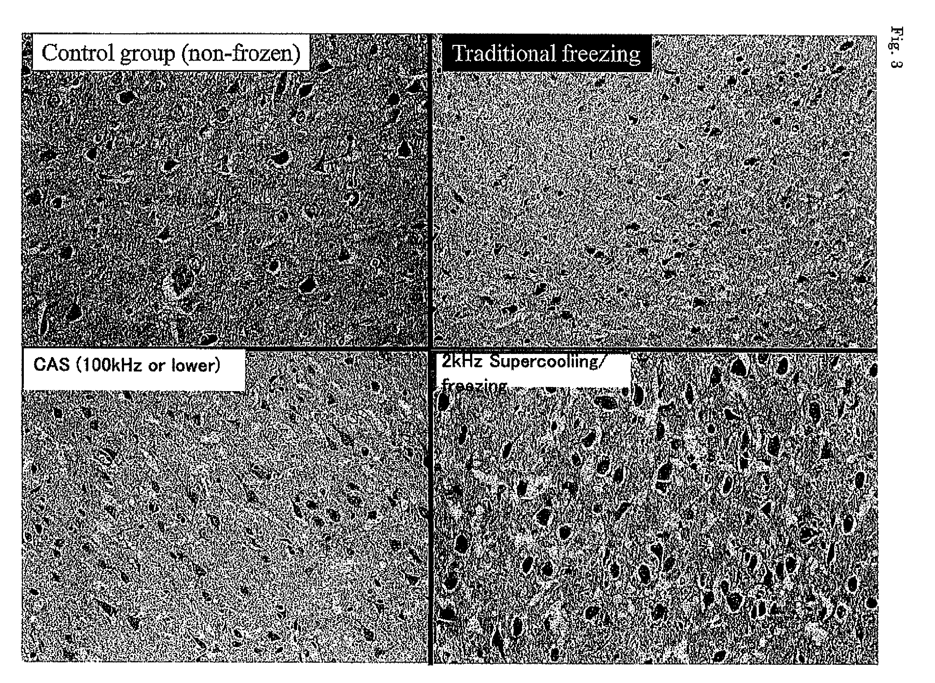

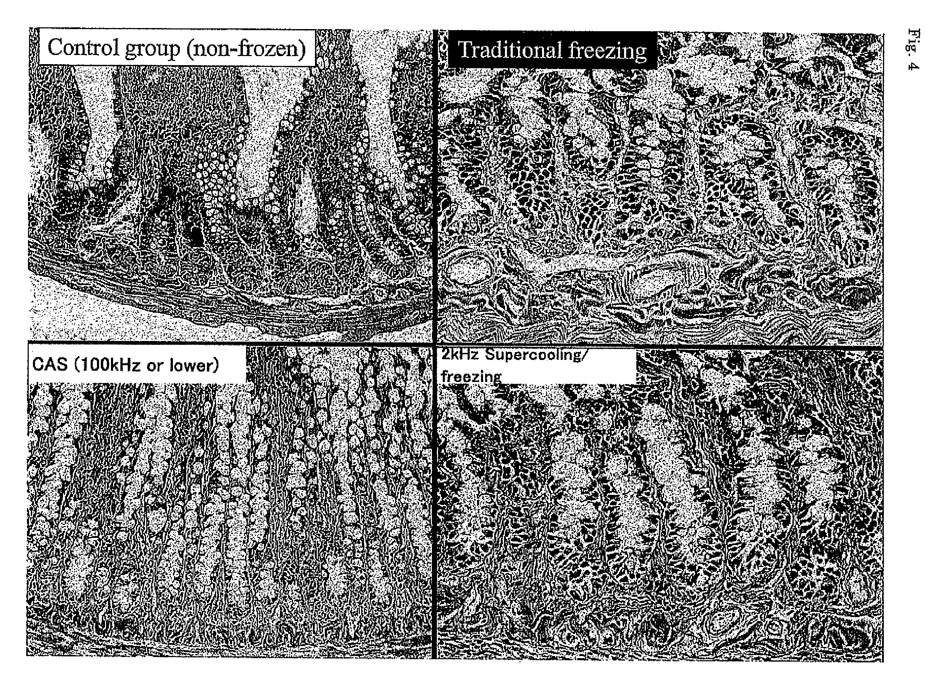

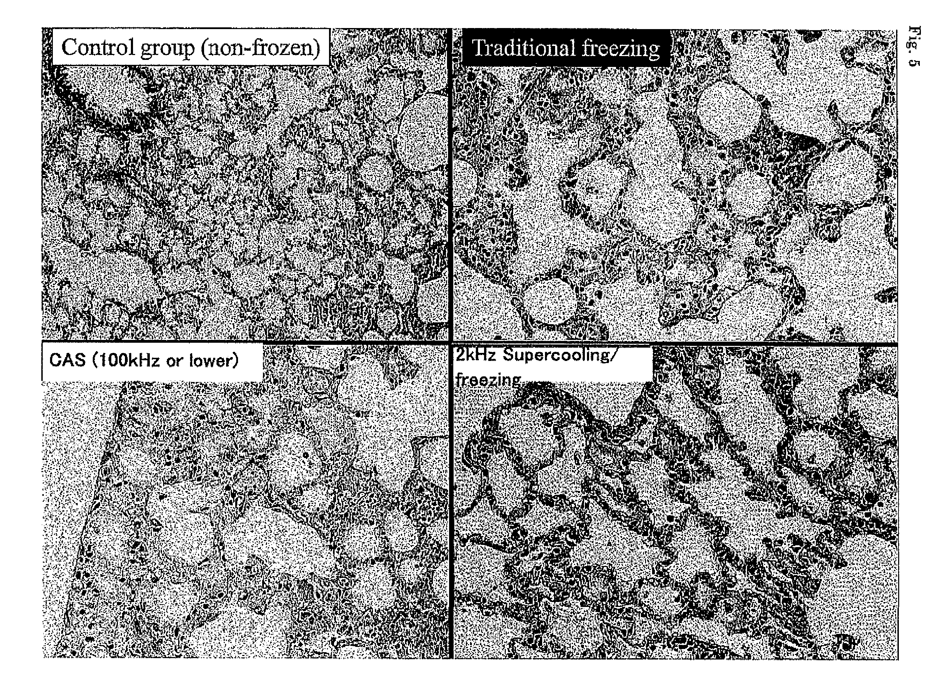

As for the brain (Fig. 3), although the structure of the brain tissue was destructed, approximately 10 times higher morphological preservation of brain cells was observed in the tissue frozen at the magnetic field frequency of 2,000 Hz according to the method of the present invention. As for the small intestine (Fig. 4), in the samples obtained by the quick freezing method and freezing at a magnetic field frequency of 100 Hz or lower, deciduation of mucosa and interstitial voids in the basement membrane were observed, whilst almost no deciduation and voids were observed in the sample frozen by the method of the present invention. As for the alveolus (Fig. 5), the alveolar structure was destructed in the samples frozen by the quick freezing method and freezing at a magnetic field frequency of 100 Hz or lower, whilst the alveolar structure was preserved in the sample frozen by the method of the present invention, and erythrocytes in the capillaries were also preserved.

### Example 3

Freezing and thawing of alkaline phosphatase (ALP) and green fluorescent protein (GFP) were repeated according to the method of the present invention, and degree of denaturation thereof was examined. A sample (100 µl) was put into a polyethylene sample tube, stored in a stainless steel tube (1 x 1 x 4 cm) filled with 1 ml of aluminum balls (diameter: 0.5 mm), frozen and thawed 6 times at a magnetic field frequency of 30 Hz or 2,000 Hz and a magnetic field intensity of 0.8 mT by performing each freezing and thawing (1 cycle) with the freezing condition: cooling from 30°C to -40°C over 45 minutes, and thawing condition: thawing to 30°C over 20 minutes after completion of the freezing.

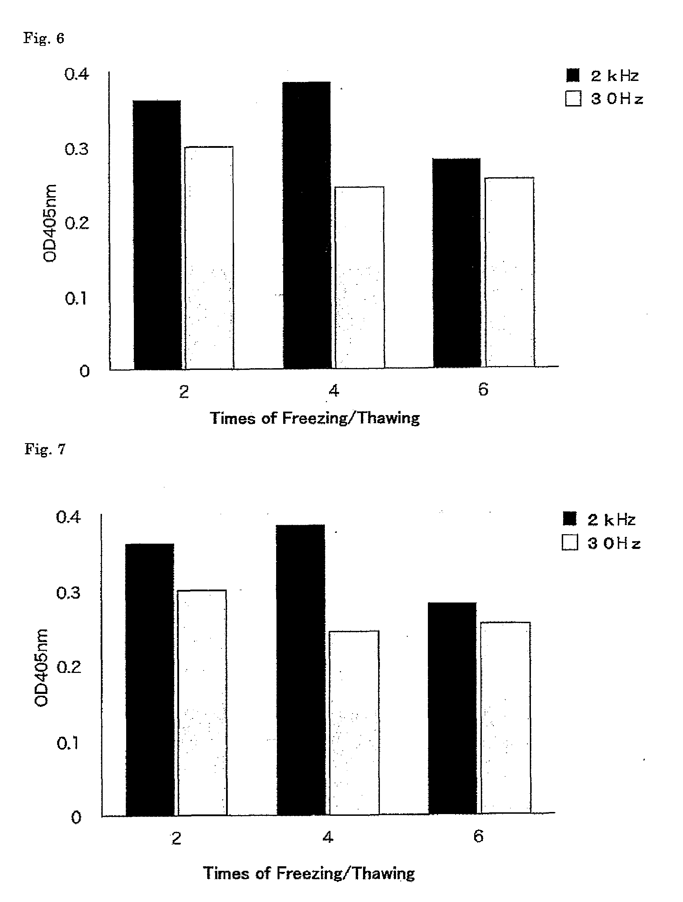

The ALP activity was measured as follows. When a sample is allowed to react on a carbonate buffer (pH 9.8) containing p-nitrophenyl phosphate, p-nitrophenyl phosphate is decomposed into p-nitrophenol and phosphoric acid by alkaline phosphatase in the sample, and the generated p-nitrophenol presents yellow color under an alkaline condition. By measuring this coloration by absorbance at 405 nm, the alkaline phosphatase activity in the sample was obtained. ALP (10 units/µl) was diluted 150 times with distilled water (0.67 units/µl), frozen and thawed 6 times under the conditions mentioned above, and the samples after the second, fourth and sixth thawing were diluted 1,000 times with distilled water (activity where 100% of the enzyme remained: 0.67 munits/µl, and used for the measurement of the activity. The experiment was also performed with the sample tube sank in aluminum balls without using the stainless steel tube. The results are shown in Figs. 6 (the stainless steel tube was used), and 7 (the stainless steel tube was not used). When the freezing and thawing were repeated at a magnetic field frequency of 2 kHz, significant ALP activity remained even after sixth freezing and thawing, especially in the case of using no stainless steel tube. It is considered that, by performing freezing and thawing in the magnetic field, denaturation of the high order structures of the protein during freezing was successfully suppressed, and thus the enzymatic activity was maintained.

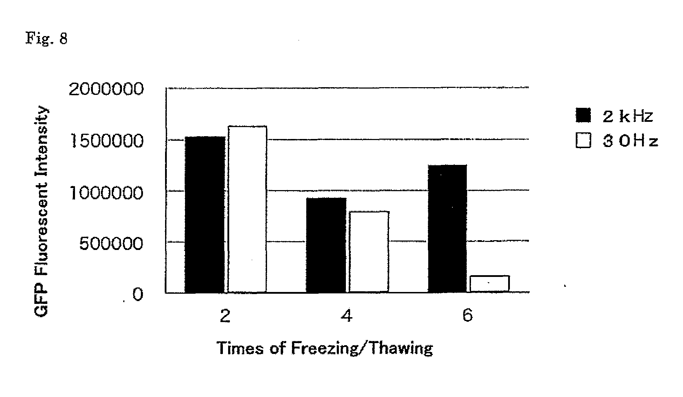

GFP (1 µg/ml) was diluted 25 times with distilled water (40 ng/ml), frozen and thawed 6 times under the same conditions as mentioned above, and the samples after the second, fourth and sixth thawing were diluted 4 times with distilled water (content where 100% of GFP remained: 10 ng /ml), each diluted solution was irradiated with an excitation light of 485 nm, and fluorescence of 535 nm was detected. The results are shown in Fig. 8. When the freezing and thawing were repeated at a magnetic field frequency of 2 kHz, high fluorescence intensity of GFP was observed even after the sixth thawing.

### Industrial Applicability

According to the magnetic resonance freezing method provided by the present invention, the time from start of freezing of an object to completion of freezing can be markedly shortened, and an object such as foods and tissues can be frozen in a substantially non-destructive state.

## Claims

1. A magnetic resonance freezing method comprising the step of cooling an object in a magnetic field, wherein frequency of the magnetic field is 200 Hz or higher.

2. The method according to claim 1, wherein the frequency of the magnetic field is in a range of from 1,000 to 10,000 Hz.

3. The method according to claim 1 or 2, wherein intensity of the magnetic field is in a range of from 0.01 to 0.4 mT.

4. The method according to any one of claims 1 to 3, wherein freezing is attained at a temperature in a range of -2°C or lower to -40°C or higher.

5. The method according to any one of claims 1 to 4, wherein freezing is attained with temperature decrease of from 0.1 to 1.0°C per 1 minute.
